# EUROPEAN PATENT APPLICATION

(11) **EP 4 764 987 A1**
(43) Date of publication of application: **24.06.2026**
(21) Application number: 25219772.8
(22) Date of filing: 01.12.2025
(51) Int. Cl.: G06Q 10/0631, G06Q 10/1093

(54) **A METHOD AND DEVICE FOR MANAGING SYSTEMS OF A FACILITY**

(30) Priority: 20.12.2024 SE 2451330
(71) Applicant: Sony Network Communications Europe B.V., 2132LS Hoofddorp (NL)
(72) Inventor: LUNDGREN, Lars-Gunnar, Basingstoke, RG22 4SB (GB); THÖRN, Ola, Basingstoke, RG22 4SB (GB)
(74) Representative: Aera A/S

(57) **Abstract**

A method, performed by a first electronic device, for managing systems of a facility is disclosed. The method comprises obtaining first information indicative of one or more attributes of at least one invitee to a first event at the facility and one or more attributes of at least one resource of the facility. The method comprises obtaining second information associated with the facility. The method selecting the at least one resource of the facility from a set of resources based on the first information and the second information. The method comprises transmitting a first indication of the selected at least one resource to a second electronic device associated with the at least one invitee.

## Description

The present disclosure relates to a method for managing systems of a facility and a related device.

### BACKGROUND

The modern work environment involves frequent meetings with various combinations on in-person and remote attendees. Facilities, and meeting rooms within such facilities, may vary widely and may be designed accommodate different meeting types. Facilities and facilities managers may now be expected to accommodate meetings of many types, ranging from large in-person groups to small hybrid meetings with some in-person attendees and some virtual attendees, all subject to rapidly changing schedules, needs, and external constraints. Facilities and building systems are not, however, managed with technical solutions or automated systems that account for impacts of the meeting environment on any specific meeting.

### SUMMARY

Facilities impact the experience, including the productivity, of participants at events, such as meetings. Recognizing and accounting for such impacts may increase the effective utilization of facility resources to increase enterprise productivity.

Accordingly, there is a need for methods and devices for managing systems of a facility, which mitigate, alleviate or address the shortcomings existing and provide for facility resource allocation based on technical analysis of data representative of prior use of the resource.

A method is disclosed. In one or more examples, the method is performed by a first electronic device, such as for managing systems of a facility. The method comprises obtaining first information indicative of, for example, one or more attributes of at least one invitee to a first event at the facility and/or one or more attributes of at least one resource of the facility. The method comprises obtaining second information, for example, associated with the facility. The method comprises selecting the at least one resource of the facility, such as selecting from a set of resources based on, for example, the first information and/or the second information. The method comprises transmitting a first indication of the selected at least one resource to, for example, a second electronic device associated with the at least one invitee.

Further, a first electronic device is provided. The device, such as a first electronic device for managing systems of a facility, comprises memory circuitry, processor circuitry, and/or an interface. The first electronic device is configured to obtain first information indicative of, for example, one or more attributes of at least one invitee to a first event at the facility and/or one or more attributes of at least one resource of the facility. The first electronic device is configured to obtain second information, for example, associated with the facility. The first electronic device is configured to select the at least one resource of the facility, such as selecting from a set of resources based on, for example, the first information and/or the second information. The first electronic device is configured to transmit a first indication of the selected at least one resource to, for example, a second electronic device associated with the at least one invitee.

It is an advantage of the present disclosure that data obtained from prior use of facility resources is analyzed and/or processed to select and/or allocate resources to new users. This allows facility management systems to identify underutilized resources or problematic conditions, schedule resources, and prompt a facility manager to take action to avoid impacting enterprise productivity.

Further, it is an advantage of the present disclosure that data based on past user experience may allow a facility manager, for example, to anticipate and plan for further or future needs, such as potential expansion or reallocation (for example, moving) resources, which may allow providing resources to increase possibilities of success for uses of the facility, such as meetings.

Further, it is an advantage that data based on past user experience and data based on objective outcomes is used to allocate facility resources. This provides an automated allocation of resources and an alternative to a manual process.

It is a further advantage of the present disclosure that a facility user may delegate resource (for example, meeting room) scheduling to a facility management system (such as an electronic device described herein) to focus time and efforts on substantive work.

Further, it is an advantage of the present disclosure that multiple data sources are used to inform resource allocation and facility management, thus allowing for integration with a variety of facility management systems across an enterprise.

It is a further advantage of the present disclosure that both in-person and remote event participants can benefit from resources identified based on technical criteria, allowing for application to a modern work environment, which was not contemplated in past office-first work settings.

### BRIEF DESCRIPTION OF THE DRAWINGS

The above and other features and advantages of the present disclosure will become readily apparent to those skilled in the art by the following detailed description of example embodiments thereof with reference to the attached drawings, in which:
Fig. 1 is a diagram illustrating an example system for managing systems, including resources, of a facility comprising example electronic devices of the facility according to this disclosure,
Figs. 2A-2B show a flow-chart illustrating an example method, performed by a first electronic device, for managing systems of a facility according to this disclosure, and
Fig. 3 is a block diagram illustrating a first electronic device for managing systems of a facility according to this disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

In many commercial settings, a facilities manager or business leader is unable to determine whether a particular aspect of a facility, such as a meeting room, has positively or negatively impacted productivity for an event. Whether an event, such as a meeting, is impactful and accomplishes the intended results is challenging to measure, especially when the impacts of the facility on the meeting are unknown.

Some approaches to address this include interviews or surveys of meeting participants, but those approaches alone may yield unreliable results and may raise more questions if relied on without other information. For example, modern meetings often involve both in-person and virtual or remote participants. Meeting experience, productivity, and answers to a survey may thus vary significantly depending on whether a participant was physically present or not. Other participant-specific factors may also impact experience, productivity, or survey results, including whether a participant joined a meeting at the scheduled time or exited the meeting early. Other factors may be group- or event- specific, including, for example, whether the meeting room was crowded or relatively empty.

Aspects of the facility itself may also affect a meeting. Architecture, for example, may influence the manner in which meeting participants may engage in creative or focused efforts. Characteristics of the room, such as size, layout, lighting, windows, and equipment may affect meeting experience or participant productivity. For some efforts, a relatively large room may be appropriate, while a smaller one may be better suited for certain tasks. Some events may be suited to exterior locations depending, for example, on time of year, time of day, season, weather conditions, environmental conditions, or the like.

These subjective and objective factors create challenges for assessing how facilities, or resources within facilities affect meetings and their participants. Such factors also make it challenging for facility managers, business leaders, or meeting organizers, for example, to manage, select, or recommend facilities (such as meeting rooms).

The present disclosure, therefore, among other solutions, includes a system that detects and anticipates how a resource, such as a meeting room or an exterior location, affects the performance of different kinds of activities, including meetings, lab-work, and demonstrations. The system is capable of operating with various inputs, including data representative of anonymized feedback (such as survey data), to manage facilities, which may include making meeting room recommendations. Other inputs may include data collected from systems within the facility and/or from devices associated with a participant or invitee to the facility. Such input data may reflect, among other attributes or characteristics, a type of meeting, a number of participants, an office presence (such as whether or not attendees will be in an office on the given day), guests (such as out-of-town guests), catering, company policies, and other requirements.

In one or more examples, a system according to the present disclosure can, instead of assigning a room only based on number of participants or only on subjective input from select participants, assign resources, such as a meeting room or location exterior to an enclosed building, based in part on, among other things, what the subject of the meeting is. For example, if a user creates a meeting invite with a title that suggests certain topics and/or categories (for example, a meeting called "Brainstorming") or has an agenda that suggest a certain kind of meeting, the system may assign resources tailored for the meeting. The system can, for example, mine the agenda, determine important information from the agenda-for example, the agenda may suggest a product demonstration that requires a certain amount of space or that the meeting will occur during a mealtime and that food will be served-and will assign resources accordingly.

Additionally or alternatively, certain participants may join remotely-that is, a participant may join the meeting but not physically present-or they may join from an unsecure internet connection (for example, external to enterprise WiFi), and resources can be allocated to accommodate. For example, when remote users are anticipated, certain physical locations within a facility may be preferable for in-person attendees, such as those locations with a camera or microphones in a meeting room to allow for ready communications between in-person and remote attendees.

In one or more examples, resource allocation may be dynamic. For example, resources may be scheduled, and then new resources may be scheduled to account for changing circumstances. An originally scheduled meeting room, for example, may have been selected because a hybrid meeting was anticipated; but on the day of the meeting, all participants may have registered with and/or accessed a facility (such as with a badge or other access device with a unique identifier), and the system may assign or schedule a new meeting room. This may improve the experience and productivity for the in-person attendees and/or it may better allocate resources to accommodate a different hybrid meeting.

A resource, such as a resource of a facility, may be seen as one or more elements that may be relevant to and potentially available for an event. For example, a resource may include a meeting room and/or an event space. A resource may be an interior location (such as internal to a facility, such as a building) or an exterior location (such as external to a facility, such as a building). In one or more examples, a resource may include equipment for the meeting, such as audio-visual equipment or accessibility equipment to make a meeting more accessible for those with special needs, such as visual and/or audio impairment, such as limited mobility. In one or more examples, a resource may include catering or other hospitality-related options, for example, snacks, meals, or beverages for an event. In one or more examples, a resource may include a database (such a list or file) of participants of an event, including potential participants. In one or more examples, a resource may include one or more of: a designated portion of the facility, a room, a portion of a room, an exterior location, office equipment, laboratory equipment, audio/visual equipment, food service equipment, collaboration tools, exercise equipment, machinery, an accessibility tool, or a vehicle. Such resources may be seen as a set of resources, which include one or some or all such resources.

An invitee may be seen as a person invited to utilize an aspect of a facility, such as a resource of the facility, whether in-person or remotely. An invitee may be a potential participant, such as a potential attendee of the event. In one or more examples, an invitee may be an employee of a company organizing the event. In one or more examples, an invitee may be an external invitee, for example, a person from another company or a client company invited to attend an event. In one or more examples, an invitee may be an organizer of the event. For example, one or more invitees may include participants to a meeting and may include one or more of: internal invitee(s), external invitee(s), and a facilitator. The invitee may for example be invited to remotely and/or in-person use a resource of the facility. For example, the invitee may be invited to remotely and/or in-person attend a first event at the facility. The facilitator may be seen as the person organizing and/or administrating the event. A facilitator may be seen as an organizer, building manager, and/or business leader, in one or more examples.

An event may be seen as a gathering of participants at a point in time, for example, a meeting. In one or more examples, an event may be a company or external event, such as a weekly meeting, a networking event, or another suitable type of gathering. A prior event may be something that occurred before another event that is the subject of scheduling or an invite for an invitee. For example, a first event may be scheduled based on information from a second event, which may be a prior event that occurred at a time before the first event.

The figures discussed herein, including in the following, are schematic and simplified for clarity, and they merely show details which aid understanding the disclosure, while other details have been left out. Throughout, the same reference numerals are used for identical or corresponding parts.

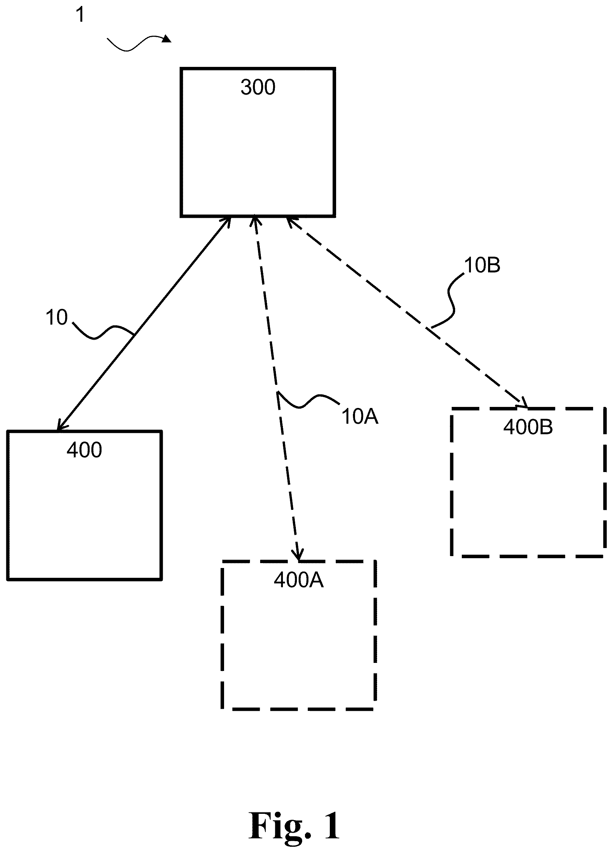

Fig. 1 is a diagram illustrating an example system 1 for managing systems of a facility, including subsystems of facility, comprising an example electronic device 300, an example electronic device 400, and, in one or more examples, other electronic devices 400A and/or 400B, according to this disclosure. In one or more examples, electronic device 300 is seen as a first electronic device and electronic device 400 is seen as a second electronic device according to this disclosure. In some examples, the electronic devices 400A and 400B may be seen as second electronic devices according to this disclosure.

The electronic devices 300 400, 400A, and 400B may be configured to communicate with one another via wired or a wireless links (or radio access link) 10, 10A, 10B. The electronic devices 300 400, 400A, and 400B may communicate with one another, either directly or via another electronic device (such as electronic device 400 communicating with electronic device 400A via electronic device 300). The links 10, 10A, 10B may represent communications via a wireless local area network (WLAN), such as WiFi, cellular communications, for example, via a 3GPP wireless communication system, Bluetooth communications, or other wireless communications, such as Zigbee or NFC. In one or more examples, links 10, 10A, 10B represent wired communication via, for example, USB, HDMI, coaxial cable, fiber optics, or another physical connection.

The electronic device 300 400, 400A, and/or 400B may be a mobile device, wearable electronic device, or sensor, or any combination thereof. In one or more examples, the electronic devices 300 400, 400A, and/or 400B may be a mobile phone, a tablet, a wearable device (such as a smart watch or location tracker), an identification fob, or an access card.

Electronic device 300 may, in one or more examples, be a server, controller, control console, control panel, or central scheduler. Electronic device 300 may be a mobile phone, a tablet, a wearable device (such as a smart watch or location tracker), an identification fob, or an access card, which may have different user or supervisory priorities or privileges than, for example, electronic device 400. Electronic device 300 may be understood as a control node.

In one or more examples, system 1 is configured to manage a facility, which may include various resources. Electronic device 300 may be a control node configured to manage booking for space (such as meeting rooms) and other resources. Electronic device 300 may manage reservation and scheduling of resources in real-time. System 1 may support occupancy tracking for a facility. Data from sensors within such a facility may be obtained by and stored in memory or storage circuitry of electronic device 300. For example, sensors within a facility may collect data related to an electronic device 400 associated with an invitee and may transmit such data to electronic device 300.

In one or more examples, sensor data, such as data related to air quality, sound levels, background noise, vibrations, position of participants in the room (for example, as determined by sensors, radar, cameras, microphones, light and/or shadows) may be obtained by electronic device 300. In one or more examples, external data, such as data related to weather and/or traffic may be obtained by electronic device 300. Second information may be seen to include such data, and system 1, such as with electronic device 300, may thus select a resource of the facility based on, such as based in part on or additionally based on, such data.

Electronic device 300 may be configured to obtain, store, and/or provide data representative of prior events. Participants may, for example, complete surveys about experiences with resources of the facility related to system 1, and data representative of such surveys may be obtained by and stored within electronic device 300.

Electronic device 300 may be configured to operate according to logic and/or controls for managing access to a facility and/or to resources of the facility. Electronic device 300 may include logic and/or controls for managing environmental conditions, such as mechanical (such as heating, ventilation, and cooling (HVAC), plumbing, humidity, scents (such as perfumes or air fresheners)), electrical (such as power, communications, audio-visual, sound (such as ambient sound or music)), and/or life safety (such as fire alarm, security, emergency back-up) of a facility. Electronic device 300 may thus be integrated with other systems or subsystems of the system 1, including, for example, mechanical, electrical, and/or life safety.

Electronic device 300 may be configured to analyze and/or generate reports related to resources of a facility. In one or more examples, electronic device 300 is configurable to manage resources of the facility to allocate resources based on such reports.

For example, electronic device 400 may be configured to obtain, store, and/or provide a comprehensive summary of resources of a facility. This may include an inventory and/or data representative of such an inventory and/or the resources themselves. This may, additionally or alternatively, include data representative of or associated with past or prior events, including a time period of such events. Such data may include data representative of one or more survey responses from prior participants (such as prior users of a resource). In one or more examples, the data is representative of a productivity score for each of the prior events. A productivity score may be seen as a score indicative of the productivity of the first event at the facility. A productivity score may for example be determined (such as assigned) based on survey data and/or objective data collected about past meetings. A productive score used as a basis for a productivity score may be a collective score, such as a score representing data associated with several individuals or a group. Or a productivity score may be based on an individual, such as one participant and/or a meeting organizer or meeting host. For example, the first electronic device may be configured to determine the productivity score based on the first information and/or second information. In one or more examples, a productivity score is determined by external or objective measures or devices (such as sensors, cameras, microphones, and/or computing devices). Such an externally determined productivity score may be used or associated with other data, such as survey data. In one or more examples, such an externally determined productivity score may not be tied to and/or associated with any particular group or person.

Survey data includes, in one or more examples, invitee or participant input, such as a structured scoring, which may include pre- and/or post- meeting evaluation, participants' rating of effectiveness, which may be based on clarity of objectives, perceived participant engagement, perceived relevance, and/or action item generation. Survey data may be based on collective, such as an aggregated, data from several participants. Additionally or alternatively, survey data may be based on one participant, such as an individual; in one or more example, such an individual may be a meeting organizer or meeting host. Scoring could, for example, assign points for preparedness, participation, articulable outcomes, and/or action items. In other words, survey data may comprise information provided, such as to the first electronic device, by an attendee of an event via a survey, such as using a survey format. In some examples, the first information indicative of one or more attributes of at least one invitee to a first event at the facility may comprise survey data.

In one or more examples, a productivity score is based on quantitative metrics, such as time efficiency, which may be a difference between an actual meeting duration and a planned or scheduled duration, agenda completion rate, which may be a percentage of predefined agenda items discussed, a decision-making rate, which may be a number of actionable decisions made during the event or in a set time period, and/or cost per meeting, which may include a value of total participant wages divided by meeting outcomes.

In one or more examples, a productivity score is based on objective data (such as objective measures) captured during an event, such as by audio-visual or online meeting tools; such objective measures may include speaking time distribution among participants, patterns of interaction among participants, frequency of interruptions, and/or perceived engagement levels, such as based on comments or chat app usage.

In one or more examples, a productivity score is based on analysis, such as a semantic analysis, of data collected during an event, such as a meeting. Such data may include minutes of meeting, a transcription, and/or audio recording, which may have, for example, documentation of actions assigned, decisions were made, and/or adherence to agenda. A productivity score may reflect an extent of participation by one or more participants. The basis for a productivity score may be a function of a meeting type; for example, a productivity score is an indicator of participation for creative meetings, but not necessarily for all kinds of meetings.

In or more examples, a productivity score may be based on, such as additionally based on, a time of day, a day of the week, and/or a day of the month. For example, a productivity score may be affected by, for example, environmental conditions, such as temperature and/or light.

A user or potential user of the facility may wish to schedule an event, such as meeting. The user may, for example, access enterprise software or a scheduling application (such as via a mobile app or client instance of program) on electronic device 400 or electronic device 300. The user may enter one or more details of the event. The user may be seen as an invitee to the event, and the user may indicate other invitees to the event. Details of such an event may be seen as attributes of the event. An attribute of the event (such as an attribute of a first event) may be seen as a title, a subject, an agenda, a document, a presentation, an audio/visual file, or an electronic message related to the first event, or any combination thereof, which the user may input or otherwise convey to electronic device 300, such as via electronic device 400 or via direct user input to electronic device 300.

The user, who may be an invitee, and any other invitees to the event may have or be associated with one or more attributes. An attribute of an invitee may be seen as, for example, a title, a role within the event, a security clearance, a seniority level, an employment status, an immigration or citizenship status, a job code, a job function, a professional credential, an identification, an ability, a location, a time zone, a telephone number, an address, or any combination thereof. Additionally or alternatively, an attribute of an invitee may be seen as a time of arrival of an electronic device 400 (such as a second electronic device) at the facility, a time of departure of an electronic device 400 (such as a second electronic device) from the facility, a time of entry of an electronic device 400 (such as a second electronic device) within a geofence, a time of exit of an electronic device 400 (such as a second electronic device) from the geofence, or any combination thereof. An attribute of at least one invitee may be seen as a quantity of invitees. In one or more examples, at least one invitee may include a set of invitees. A quantity of invitees may, for example, by the quantity (such as a numerical value) of invitees in the set.

In one or more examples, a user may indicate a preference, which may be based on a time of day, day of the week, day of the month, and/or season, which in turn may be based on or influenced by environmental conditions associated with such time and/or season. For example, a portion of a facility, such as a room or a location external to a facility, may be preferrable in certain weather conditions (for example, because of a view), which may be more likely during summer rather than winter. A location external to a facility may be seen as an exterior location and/or may be referred to as an outdoor location. Additionally or alternatively, a portion of a facility, and/or a location external to a facility, may be warmer or colder during certain times and/or seasons. In one or more examples, survey data includes such information based on prior user experience and/or data.

Electronic device 300 may obtain information indicative of one or more attributes, such as data about such attributes. Electronic device 300 may also obtain information indicative of one or more attributes of a facility, such as data about one or more attributes of a resource or resources of a facility. An attribute of a resource of the facility may be seen as one or more of: a size of physical space within the facility, an indication of available equipment, a geographic location of the facility, a building location associated with the facility, a characteristic of the facility related to environmental conditions, and climate control features.

Electronic device 300 may thus obtain first information indicative of one or more attributes of at least one invitee to a first event at the facility (such as via link 10 from electronic device 400 and/or from internal data of electronic device 300) and one or more attributes of at least one resource of the facility (such as via link 10A from electronic device 400A and/or from internal data of electronic device 300).

Electronic device 300 may obtain information (such as first and/or second information) from one or several sources, and such information may include control information or data associated with such source. In one or more examples, electronic device 300 may obtain information (such as first information) that comprises or is based on system (GPS) information, wireless local area network (WLAN) information, Bluetooth information, cellular network information, or a result of a quick response (QR) code scan, or any combination thereof.

Electronic device 300 may obtain second information, which may be an indication of data or data itself, associated with the facility, such as aspects of data representative of resources of the facility and/or attributes of such resources, from electronic devices 400, from internal memory or storage, from external memory or storage, such as from cloud storage, and/or from other elements or subsystems of system 1.

Electronic device 300 may select at least one resource of the facility from a set of resources based on the first information and/or the second information. Electronic device 300 may then, for example, transmit data, such as information, such as an indication of resources, such as selected resources, to electronic device(s) 400.

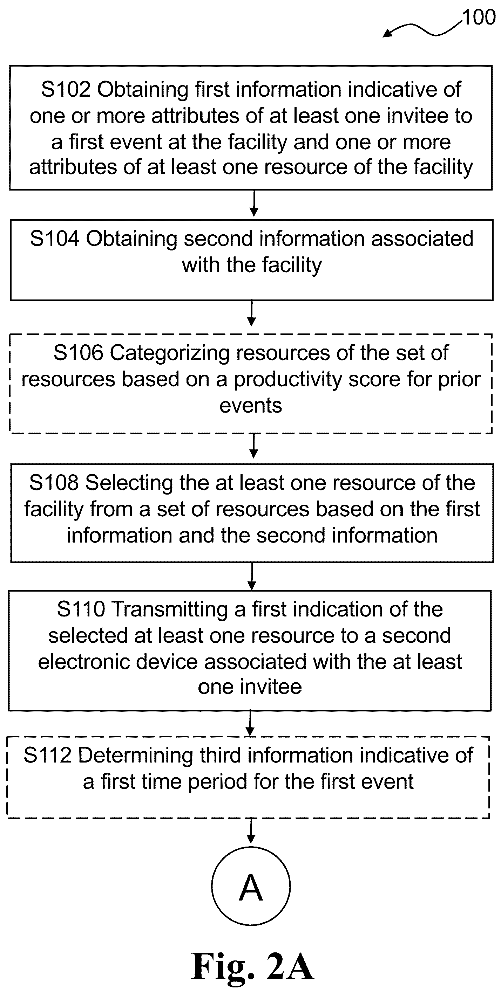

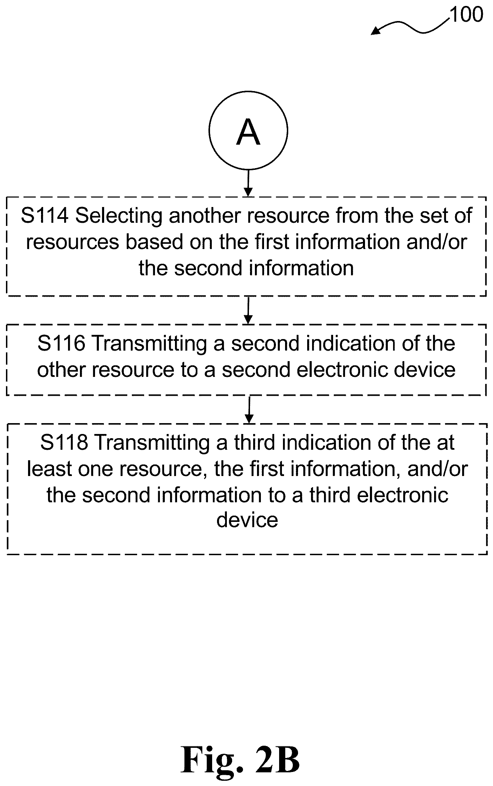

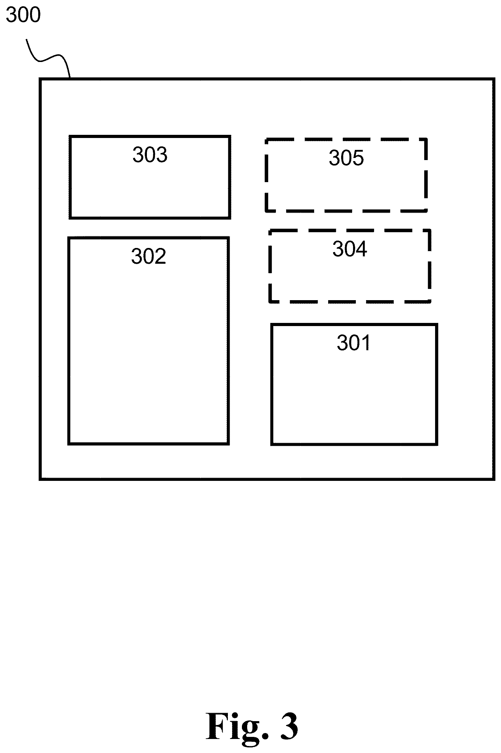

Figs. 2A-2B show a flow-chart of an example method 100 for managing systems of a facility according to this disclosure. The method 100 may be performed by a first electronic device, such as the first electronic device disclosed herein, such as electronic device 300 of Fig. 1 and Fig. 3, for managing systems of a facility.

The method 100 comprises obtaining S102 first information indicative of one or more attributes of at least one invitee to a first event at the facility and/or one or more attributes of at least one resource of the facility. In one or more examples, the first information comprises data, such as data representative of the one or more attributes of the at least one invitee. The first information, such as the data representative of the one or more attributes of the at least one invitee, for example comprises survey data, objective data, and/or one or more quantitative metrics as disclosed herein.

In one or more examples, the one or more attributes of the at least one invitee comprises at least one of a time of arrival of the second electronic device at the facility, a time of departure of second electronic device from the facility, a time of entry of the second electronic device within a geofence, a time of exit of the second electronic device from the geofence, or any combination thereof.

In one or more examples, the one or more attributes of the at least one invitee comprises at least one of a title, a role within the first event, a security clearance, a seniority level, an employment status, an immigration or citizenship status, a job code, a job function, a professional credential, an identification, an ability, a location, a time zone, a telephone number, or any combination thereof.

In one or more examples, the first information comprises at least one of global positioning system (GPS) information, wireless local area network (WLAN) information, Bluetooth information, cellular network information, or a result of a quick response (QR) code scan, or any combination thereof. The first information may be seen as comprising location information conveyed in and/or determined from such signals.

In one or more examples, the one or more attributes of the at least one resource of the facility comprises at least one of a size of physical space within the facility, an indication of available equipment, a geographic location of the facility, a building location associated with the facility, a characteristic of the facility related to environmental conditions, or climate control features, or any combination thereof.

In one or more examples, the at least one resource of the facility is associated with the first event at the facility. For example, the at least one resource of the facility may be a resource utilized at the first event, such as a meeting room at the facility.

In one or more examples, the first information comprises data, such as data representative of one or more attributes of the first event. In one or more examples, the one or more attributes of the first event comprise at least one of a title, a subject, an agenda, a document, a presentation, an audio-visual file, or an electronic message related to the first event, or any combination thereof.

In one or more examples, the at least one invitee comprises a set of invitees. In one or more examples, the one or more attributes of the at least one invitee comprises a quantity of invitees, such as a quantity of invitees in the set of invitees.

In one or more examples, one or more attributes of the at least one invitee comprises a location, such as a location of each invitee, such as a location of each invitee in the set of invitees. A location of each invitee may be seen as data related to, such as an indication of, a physical location of an invitee and/or an indicator of whether an invitee will attend an event in-person or remotely. A location of each invitee may be seen as a physical location, such as a geographic location and/or an office location and/or a relative location, such as a location relative to one or more other invitees. In some examples, any information disclosed herein, such as information associated with the one or more invitees, may be encrypted to facilitate security of the information and/or may be anonymous, such as anonymized, to facilitate privacy of information relating to invitees.

In one or more examples of the method 100, the set of resources comprises at least one of a designated portion of the facility, a room, a portion of a room, office equipment, laboratory equipment, audio/visual equipment, food service equipment, collaboration tools, exercise equipment, machinery, an accessibility tool, or a vehicle, or any combination thereof. The at least one resource selected from the set may be seen as at least one resource comprising at least one of of a designated portion of the facility, a room, a portion of a room, office equipment, laboratory equipment, audio/visual equipment, food service equipment, collaboration tools, exercise equipment, machinery, an accessibility tool, or a vehicle, or any combination thereof. In one or more examples, the at least one resource comprises more than one, such as some or all, resources.

The method 100 comprises obtaining S104 second information associated with the facility.

In one or more examples, the first information comprises signaling, such as signaling associated with the second electronic device (such as electronic device 400 of Fig. 1). The signaling may be seen as a transmission or communication from the second electronic device.

In one or more examples, the second information comprises a second time period, such as a second time period that occurs before the first time period. In one or more examples, the second information comprises data, such as data representative of one or more survey responses, such as survey responses from prior users of the at least one resource.

In one or more examples, the second information is based on a timing of the first event, such as a time of day, a time of week, and/or a time of month.

In one or more examples, the second information comprises data, such as data representative of one or more prior events at the facility. In some examples, the second information comprises data associated with one or more prior events at the facility. In one or more examples, the second information comprises data, such data representative of a productivity score, such as a productivity score for one or more prior events, such as each of the prior events at the facility.

In one or more examples, obtaining the second information comprises determining, such as based on one or more survey responses and/or the second time period, the productivity score, such as the productivity score for one or more prior events, such as the productivity score for each of the prior events at the facility.

In one or more examples, the method comprises categorizing S106 resources of the set of resources, such as based on the productivity score, such as based on the productivity score for one or more prior events, such as based on the productivity score for each of the prior events. In one or more examples, selecting comprises selecting the at least one resource, such as based on the categorizing. For example, the productivity score may be associated with a resource. For example, a particular meeting room, such as for an event (such as meeting) having a particular category (such as "brainstorming") may have a given productivity score for that particular category resource combination. In some examples, the electronic device may be configured to obtain, such as determine, a productivity score for one or more, such as each) category resource combinations (for example particular room combined with event type). In one or more example methods, obtaining S102 the first information may comprise categorizing an event based on one or more strings in an event invitation. For example, the categorizing an event may comprise performing one or more keyword analysis and/or key recognition techniques, for example based on an event invitation, such as based on textual data of a meeting invitation.

The method 100 comprises selecting S108 the at least one resource of the facility from a set of resources based on the first information and the second information. In one or more examples, selecting the at least one resource comprises selecting more than one, such as some or all, resources from the set of resources.

In some examples, the electronic device is configured to obtain, such as determine, a criterion, such as productivity criterion. The criterion is for example based on a threshold. For example, selecting S108 the at least one resource of the facility may comprise determining whether the productivity score meets the satisfies the criterion. For example, whether the productivity score satisfies the criterion will depend on whether the productivity score is greater than or equal to the threshold. For example, when the productivity score is greater than or equal to the threshold, the criterion can be seen as being satisfied by the productivity score. For example, when the productivity score is less than the threshold, the criterion can be seen as not being satisfied by the productivity score. In some examples, selecting S108 the at least one resource of the facility may comprise selecting, based on whether the productivity score satisfies the criterion, the at least one resource of the facility. For example, when the event is a "brainstorming" meeting, when the productivity score for a "brainstorming" meeting corresponding with a given meeting room meets the criterion, the first electronic device may select that meeting room for the first event.

The method 100 comprises transmitting S110 a first indication of the selected at least one resource to a second electronic device associated with the at least one invitee. The first indication for example comprises information indicative of the at least one resource having been selected. In some examples, transmitting S110 the first indication comprises allocating at least one resource, for example for utilisation at the first event. The selected at least one resource may for example be a selected meeting room at which the first event at the facility is to be held. The first information may for example comprise location information indicative of the location of the selected at least one resource. In some examples, the first indication may comprise information indicative of one or more technical capabilities and/or features of the selected at least one resource. For example, when the selected resource is a meeting room the first indication may indicate whether projector, wired internet connection, laser pointer, etc., are available. In some examples, the electronic device may be configured to reserve the selected at least one resource for the first event, for example by communicating with a resource management system associated with the facility.

In one or more examples, the method 100 comprises determining S112 third information indicative of a time period, such as a first time period, for the first event. The first time period may be seen as a time of day, a day of a week, a calendar day, a date, a relative time, such as morning, mid-day, and/or evening, and/or a time made with reference to an objective measure, such as Greenwich Mean Time (GMT). In one or more examples, the selecting the at least one resource of the facility is, for example, based on, such as additionally based on, on the third information. In one or more examples, the second information is based on the third information.

In one or more examples, the method comprises selecting S114 another resource from the set of resources, such as based on the first information and/or the second information. Selecting the other resource may be seen as rescheduling and/or reallocating one or more resources of the set of resources. Reallocating resources may be based on updated data of the first information and/or the second information. Updated data may be based on, for example, location information of the at least one invitee.

In one or more examples, the method comprises transmitting S116 a second indication of the other resource, such as to the second electronic device. The second indication for example comprises information indicative of the other resource having been selected.

In one or more examples, the method comprises transmitting S118 a third indication of the at least one resource, the first information, and/or the second information, such as to a third electronic device, such as a third device associated with a management system of the facility. The third device associated with the management system of the facility may be seen as a supervisory device and/or an electronic device (such as an electronic device 400A) associated with a facility manager and/or a person other than an invitee.

In one or more examples of the method 100, the first electronic device, the second electronic device, and/or the third electronic device each comprises at least one of a/an server, computer, access point, mobile device, wearable electronic device, or sensor, or any combination thereof. In some examples, the first electronic device may be a server device and/or the second electronic device may be a user electronic device, such as a smartphone, laptop, electronic wearable device, etc.

Fig. 3 shows a block diagram of an example electronic device 300 according to the disclosure. The electronic device 300 comprises memory circuitry 301, processor circuitry 302, and a wireless interface 303. In one or more examples, electronic device 300 comprises a user interface 304. In one or more examples, the electronic device comprises a camera 305. The electronic device 300 may be configured to perform any of the methods disclosed in Figs. 2A-B. In other words, the electronic device 300 may be configured for managing systems of a facility. In some examples, the first electronic device 300 may be seen as a facility management device. In some examples, the first electronic device 300 may be seen as a resource selection device. In some examples, the first electronic device 300 may be seen as a resource allocation device, such as a device configured to allocate one or more resources for the first event.

The electronic device 300 may be an example of first electronic device 300 of Fig. 1. The electronic device 300 may be referred to as a first electronic device, such as the first electronic device as disclosed herein. The electronic device 300 is configured to obtain first information, such as via interface 303 and/or from memory circuitry 301. In one or more examples, the first information is obtained, at least in part, via user interface 304. The first information may be indicative of one or more attributes of at least one invitee to a first event at the facility and/or one or more attributes of at least one resource of the facility.

The electronic device 300 is configured to obtain second information, such as via interface 303 and/or memory circuitry 301. The second information may be associated with the facility and may be obtained from another device (such as electronic device 400 of Fig. 1). In one or more examples, the electronic device 300 is configured to obtain (such as via user interface 304) second information.

The electronic device 300 is configured to select (such as with processor circuitry 302) the at least one resource of the facility from a set of resources, such as select based on the first information and/or the second information. The set of resources may, for example, be represented by data stored in memory circuitry 301.

The electronic device 300 is configured to transmit a first indication (such as via interface 303) of the selected at least one resource to a second electronic device (such as device 400 of Fig. 1), which may be associated with the at least one invitee.

In one or more examples, the electronic device 300 is configured to determine third information (such as with processor circuitry 302) indicative of a first time period for the first event. In one or more examples, the electronic device 300 is configured to select the at least one resource of the facility, such as select additionally based on the third information.

In one or more examples, the one or more attributes of the at least one invitee comprises at least one of a time of arrival of the second electronic device at the facility, a time of departure of second electronic device from the facility, a time of entry of the second electronic device within a geofence, a time of exit of the second electronic device from the geofence, or any combination thereof.

In one or more examples, the first information comprises signaling associated with the second electronic device. The first information may be received via interface 303 from the second electronic device.

In one or more examples, the first information comprises at least one of global positioning system (GPS) information, wireless local area network (WLAN) information, Bluetooth information, cellular network information, or a result of a quick response (QR) code scan, or any combination thereof. In one or more examples, the electronic device 300 is configured to obtain the first information, such as first information comprising a QR code scan, via the camera 305.

In one or more examples, the first information comprises data representative of the one or more attributes of the at least one invitee. In one or more examples, the one or more attributes of the at least one invitee comprises at least one of a title, a role within the first event, a security clearance, a seniority level, an employment status, an immigration or citizenship status, a job code, a job function, a professional credential, an identification, an ability, a location, a time zone, a telephone number, or any combination thereof.

In one or more examples, the first information comprises data representative of one or more attributes of the first event. In one or more examples, the one or more attributes of the first event comprises at least one of a title, a subject, an agenda, a document, a presentation, an audio-visual file, or an electronic message related to the first event, or any combination thereof.

In one or more examples, the at least one invitee comprises a set of invitees. In one or more examples, the one or more attributes of the at least one invitee comprises a quantity of invitees in the set of invitees. In one or more examples, one or more attributes of the at least one invitee comprises a location of each invitee in the set of invitees.

In one or more examples, the at least one resource comprises at least one of a designated portion of the facility, a room, a portion of a room, office equipment, laboratory equipment, audio-visual equipment, food service equipment, collaboration tools, exercise equipment, machinery, an accessibility tool, or a vehicle, or any combination thereof.

In one or more examples, the one or more attributes of the at least one resource comprises at least one of a size of physical space within the facility, an indication of available equipment, a geographic location of the facility, a building location associated with the facility, a characteristic of the facility related to environmental conditions, or climate control features, or any combination thereof.

In one or more examples, the second information comprises a second time period, such as a second time period that occurs before the first time period. In one or more examples, the second information comprises data representative of one or more survey responses, such as one or more survey responses from prior users of the at least one resource. In one or more examples, the second information comprises data, such as data representative of one or more prior events at the facility. In one or more examples, the second information comprises data, such as data representative of a productivity score for each of the prior events at the facility.

In one or more examples, the electronic device 300 is configured to categorize (such as with processor circuitry 302) resources of the set of resources, such as categorize based on the productivity score for each of the prior events. In one or more examples, the electronic device 300 is configured to select the at least one resource, such as select based on the categorizing.

In one or more examples, the electronic device 300 configured to select (such as with processor circuitry 302) another resource from the set of resources, such as select based on the first information and/or the second information. In one or more examples, the electronic device 300 is configured to transmit (such as via interface 303) a second indication of the other resource, such as transmit to the second electronic device.

In one or more examples, the electronic device 300 configured to transmit (such as via interface 303) a third indication of the at least one resource, the first information, and/or the second information, such as transmit to a third electronic device (such as electronic device 400A of Fig. 1), such as a third electronic device associated with a management system of the facility.

In one or more examples, the electronic device 300, the second electronic device, and/or the third electronic device each comprises at least one of a server, computer, access point, mobile device, wearable electronic device, or sensor, or any combination thereof.

The interface 303 may be configured for wired communications, such as via USB, HDMI, Ethernet, coaxial, and/or fiber optic cabling. The interface 303 may be configured for wireless communications, such as via a wireless communication system, such as a 3GPP system, such as a 3GPP system supporting one or more of: New Radio, NR, Narrowband loT, NB-loT, and Long Term Evolution - enhanced Machine Type Communication, LTE-M.

The electronic device 300 is optionally configured to perform any of the operations disclosed in Figs. 2A-2B (such as any one or more of S102, S104, S106, S108, S110, S112, S114, S116, and/or S118). The operations of the electronic device 300 may be embodied in the form of executable logic routines (for example, lines of code, software programs, etc.) that are stored on a non-transitory computer readable medium (for example, memory circuitry 301) and are executed by processor circuitry 302.

Furthermore, the operations of the electronic device 300 may be considered a method that the electronic device 300 is configured to carry out. Also, while the described functions and operations may be implemented in software, such functionality may as well be carried out via dedicated hardware or firmware, or some combination of hardware, firmware and/or software.

Memory circuitry 301 may be one or more of a buffer, a flash memory, a hard drive, a removable media, a volatile memory, a non-volatile memory, a random access memory (RAM), or another suitable device. In a typical arrangement, memory circuitry 301 may include a non-volatile memory for long term data storage and a volatile memory that functions as system memory for processor circuitry 302. Memory circuitry 301 may exchange data with processor circuitry 302 over a data bus. Control lines and an address bus between memory circuitry 301 and processor circuitry 302 also may be present (not shown in Fig. 3). Memory circuitry 301 is considered a non-transitory computer readable medium.

Memory circuitry 301 may be configured to store information (such as first information indicative of indicative of one or more attributes of at least one invitee and/or one or more attributes of at least one resource of the facility and/or second information associated with the facility) in a part of the memory.

Embodiments of methods and electronic devices according to the disclosure are set out in the following items:
Item 1. A method, performed by a first electronic device and/or one or more additional electronic devices, for managing systems of a facility, the method comprising: obtaining first information indicative of one or more attributes of at least one invitee to a first event at the facility and one or more attributes of at least one resource of the facility; obtaining second information associated with the facility; selecting the at least one resource of the facility from a set of resources based on the first information and the second information; and transmitting a first indication of the selected at least one resource to a second electronic device associated with the at least one invitee.
Item 2. The method according to item 1, the method comprising determining third information indicative of a first time period for the first event, wherein the selecting the at least one resource of the facility is additionally based on the third information.
Item 3. The method according to any of the preceding items, wherein the one or more attributes of the at least one invitee comprises at least one of a time of arrival of the second electronic device at the facility, a time of departure of second electronic device from the facility, a time of entry of the second electronic device within a geofence, a time of exit of the second electronic device from the geofence, or any combination thereof.
Item 4. The method according to any of the preceding items, wherein the first information comprises signaling associated with the second electronic device.
Item 5. The method according to any of the preceding items, wherein the first information comprises at least one of global positioning system, GPS, information, wireless local area network, WLAN, information, Bluetooth information, cellular network information, or a result of a quick response, QR, code scan, or any combination thereof.
Item 6. The method according to any of the preceding items, wherein the first information comprises data representative of the one or more attributes of the at least one invitee.
Item 7. The method according to any of the preceding items, wherein the one or more attributes of the at least one invitee comprises at least one of a title, a role within the first event, a security clearance, a seniority level, an employment status, an immigration or citizenship status, a job code, a job function, a professional credential, an identification, an ability, a location, a time zone, a telephone number, or any combination thereof.
Item 8. The method according to any of the preceding items, wherein the first information comprises data representative of one or more attributes of the first event.
Item 9. The method according to any of the preceding items, wherein the one or more attributes of the first event comprises at least one of a title, a subject, an agenda, a document, a presentation, an audio/visual file, or an electronic message related to the first event, or any combination thereof.
Item 10. The method according to any of the preceding items, wherein the at least one invitee comprises a set of invitees and the one or more attributes of the at least one invitee comprises a quantity of invitees in the set of invitees.
Item 11. The method according to item 10, wherein one or more attributes of the at least one invitee comprises a location of each invitee in the set of invitees.
Item 12. The method according to any of the preceding items wherein the set of resources comprises at least one of a designated portion of the facility, a room, a portion of a room, office equipment, laboratory equipment, audio/visual equipment, food service equipment, collaboration tools, exercise equipment, machinery, an accessibility tool, or a vehicle, or any combination thereof.
Item 13. The method according to any of the preceding items wherein the one or more attributes of the at least one resource comprises at least one of a size of physical space within the facility, an indication of available equipment, a geographic location of the facility, a building location associated with the facility, a characteristic of the facility related to environmental conditions, or climate control features, or any combination thereof.
Item 14. The method according to any of the preceding items, wherein the second information comprises a second time period that occurs before the first time period.
Item 15. The method according to any of the preceding items, wherein the second information comprises data representative of one or more survey responses from prior users of the at least one resource.
Item 16. The method according to any of the preceding items, wherein the second information comprises data representative of one or more prior events at the facility.
Item 17. The method according to any of the preceding items, wherein the second information comprises data representative of a productivity score for each of the prior events at the facility.
Item 18. The method according to item 17, the method comprising categorizing resources of the set of resources based on the productivity score for each of the prior events, wherein the selecting comprises selecting the at least one resource based on the categorizing.
Item 19. The method according to any of the preceding items, the method comprising: selecting another resource from the set of resources based on the first information and/or the second information; and transmitting a second indication of the other resource to the second electronic device.
Item 20. The method according to any of the preceding items, the method comprising transmitting a third indication of the at least one resource, the first information, and/or the second information to a third electronic device associated with a management system of the facility.
Item 21. The method according to any of the preceding items, wherein the first electronic device, the second electronic device, and/or the third electronic device each comprises at least one of a server, computer, access point, mobile device, wearable electronic device, or sensor, or any combination thereof.
Item 22. A first electronic device, for managing systems of a facility, comprising memory circuitry, processor circuitry, and an interface, the electronic device configured to: obtain first information indicative of one or more attributes of at least one invitee to a first event at the facility and one or more attributes of at least one resource of the facility; obtain second information associated with the facility; select the at least one resource of the facility from a set of resources based on the first information and the second information; and transmit a first indication of the selected at least one resource to a second electronic device associated with the at least one invitee.
Item 23. The first electronic device according to item 22, the first electronic device configured to determine third information indicative of a first time period for the first event and select the at least one resource of the facility additionally based on the third information.
Item 24. The first electronic device according to any of items 22-23, wherein the one or more attributes of the at least one invitee comprises at least one of a time of arrival of the second electronic device at the facility, a time of departure of second electronic device from the facility, a time of entry of the second electronic device within a geofence, a time of exit of the second electronic device from the geofence, or any combination thereof.
Item 25. The first electronic device according to any of items 22-24, wherein the first information comprises signaling associated with the second electronic device.
Item 26. The first electronic device according to any of items 22-25, wherein the first information comprises at least one of global positioning system, GPS, information, wireless local area network, WLAN, information, Bluetooth information, cellular network information, or a result of a quick response, QR, code scan, or any combination thereof.
Item 27. The first electronic device according to any of items 22-26, wherein the first information comprises data representative of the one or more attributes of the at least one invitee.
Item 28. The first electronic device according to any of items 22-27, wherein the one or more attributes of the at least one invitee comprises at least one of a title, a role within the first event, a security clearance, a seniority level, an employment status, an immigration or citizenship status, a job code, a job function, a professional credential, an identification, an ability, a location, a time zone, a telephone number, or any combination thereof.
Item 29. The first electronic device according to any of items 22-28, wherein the first information comprises data representative of one or more attributes of the first event.
Item 30. The first electronic device according to any of items 22-29, wherein the one or more attributes of the first event comprises at least one of a title, a subject, an agenda, a document, a presentation, an audio/visual file, or an electronic message related to the first event, or any combination thereof.
Item 31. The first electronic device according to any of items 22-30, wherein the at least one invitee comprises a set of invitees and the one or more attributes of the at least one invitee comprises a quantity of invitees in the set of invitees.
Item 32. The first electronic device according to item 31, wherein one or more attributes of the at least one invitee comprises a location of each invitee in the set of invitees.
Item 33. The first electronic device according to any of items 22-32, wherein the set of resources comprises at least one of a designated portion of the facility, a room, a portion of a room, office equipment, laboratory equipment, audio/visual equipment, food service equipment, collaboration tools, exercise equipment, machinery, an accessibility tool, or a vehicle, or any combination thereof.
Item 34. The first electronic device according to any of items 22-33, wherein the one or more attributes of the at least one resource comprises at least one of a size of physical space within the facility, an indication of available equipment, a geographic location of the facility, a building location associated with the facility, a characteristic of the facility related to environmental conditions, or climate control features, or any combination thereof.
Item 35. The first electronic device according to any of items 22-34, wherein the second information comprises a second time period that occurs before the first time period.
Item 36. The first electronic device according to any of items 22-35, wherein the second information comprises data representative of one or more survey responses from prior users of the at least one resource.
Item 37. The first electronic device according to any of items 22-36, wherein the second information comprises data representative of one or more prior events at the facility.
Item 38. The first electronic device according to any of items 22-37, wherein the second information comprises data representative of a productivity score for each of the prior events at the facility.
Item 39. The first electronic device according to item 38, the first electronic device configured to categorize resources of the set of resources based on the productivity score for each of the prior events and select the at least one resource based on the categorizing.
Item 40. The first electronic device according to any of items 22-39, the electronic device configured to: select another resource from the set of resources based on the first information and/or the second information; and transmit a second indication of the other resource to the second electronic device.
Item 41. The first electronic device according to any of items 22-40, the first electronic device configured to: transmit a third indication of the at least one resource, the first information, and/or the second information to a third electronic device associated with a management system of the facility.
Item 42. The first electronic device according to any of items 22-41, wherein the first electronic device, the second electronic device, and/or the third electronic device each comprises at least one of a server, computer, access point, mobile device, wearable electronic device, or sensor, or any combination thereof.
Item 43. A system for managing a facility, such as other systems of a facility, the system comprising one or more electronic devices, the system configured to; obtain first information indicative of one or more attributes of at least one invitee to a first event at the facility and one or more attributes of at least one resource of the facility; obtain second information associated with the facility; select the at least one resource of the facility from a set of resources based on the first information and the second information; and transmit a first indication of the selected at least one resource to a second electronic device associated with the at least one invitee.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that Figs. 1-3 comprises some circuitries or operations which are illustrated with a solid line and some circuitries or operations which are illustrated with a dashed line. Circuitries or operations which are comprised in a solid line are circuitries or operations which are comprised in the broadest example embodiment. Circuitries or operations which are comprised in a dashed line are example embodiments which may be comprised in, or a part of, or are further circuitries or operations which may be taken in addition to circuitries or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that a list in the form of "at least one of A, B, or C, or any combination thereof" should be understood to mean "A", or "B", or "C", or "A and B", or "A and C", or "B and C", or "A and B and C".

It should further be noted that any reference signs do not limit the scope of the claims, that the example embodiments may be implemented at least in part by means of both hardware and software, and that several "means", "units" or "devices" may be represented by the same item of hardware.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. A method (100), performed by a first electronic device, for managing systems of a facility, the method comprising:
- obtaining (S102) first information indicative of one or more attributes of at least one invitee to a first event at the facility and one or more attributes of at least one resource of the facility;
- obtaining (S104) second information associated with the facility;
- selecting (S108) the at least one resource of the facility from a set of resources based on the first information and the second information; and
- transmitting (S110) a first indication of the selected at least one resource to a second electronic device associated with the at least one invitee.

2. The method according to claim 1, the method comprising determining (S112) third information indicative of a first time period for the first event, wherein the selecting the at least one resource of the facility is additionally based on the third information.

3. The method according to any of the preceding claims, wherein the one or more attributes of the at least one invitee comprises at least one of a time of arrival of the second electronic device at the facility, a time of departure of second electronic device from the facility, a time of entry of the second electronic device within a geofence, a time of exit of the second electronic device from the geofence, or any combination thereof.

4. The method according to any of the preceding claims, wherein the first information comprises signaling associated with the second electronic device.

5. The method according to any of the preceding claims, wherein the first information comprises at least one of global positioning system, GPS, information, wireless local area network, WLAN, information, Bluetooth information, cellular network information, or a result of a quick response, QR, code scan, or any combination thereof.

6. The method according to any of the preceding claims, wherein the first information comprises data representative of the one or more attributes of the at least one invitee.

7. The method according to any of the preceding claims, wherein the one or more attributes of the at least one invitee comprises at least one of a title, a role within the first event, a security clearance, a seniority level, an employment status, an immigration or citizenship status, a job code, a job function, a professional credential, an identification, an ability, a location, a time zone, a telephone number, or any combination thereof.

8. The method according to any of the preceding claims, wherein the first information comprises data representative of one or more attributes of the first event.

9. The method according to any of the preceding claims wherein the set of resources comprises at least one of a designated portion of the facility, a room, a portion of a room, a location external to the facility, office equipment, laboratory equipment, audio/visual equipment, food service equipment, collaboration tools, exercise equipment, machinery, an accessibility tool, or a vehicle, or any combination thereof.

10. The method according to any of the preceding claims wherein the one or more attributes of the at least one resource comprises at least one of a size of physical space within the facility, an indication of available equipment, a geographic location of the facility, a building location associated with the facility, a characteristic of the facility related to environmental conditions, or climate control features, or any combination thereof.

11. The method according to any of the preceding claims, wherein the second information comprises a second time period that occurs before the first time period.

12. The method according to any of the preceding claims, wherein the second information comprises data representative of one or more survey responses from prior users of the at least one resource.

13. The method according to any of the preceding claims, wherein the second information comprises data representative of one or more prior events at the facility.

14. The method according to any of the preceding claims, wherein the second information comprises data representative of a productivity score for each of the prior events at the facility.

15. The method according to any of the preceding claims, the method comprising transmitting a third indication of the at least one resource, the first information, and/or the second information to a third electronic device associated with a management system of the facility.
